(19) Europäisches Patentamt
European Patent Office
Office européen des brevets

(11) **EP 2 068 135 B1**

(12) **EUROPÄISCHE PATENTSCHRIFT**

(45) Veröffentlichungstag und Bekanntmachung des Hinweises auf die Patenterteilung:
**22.07.2009  Patentblatt 2009/30**

(51) Int Cl.:
*G01J 3/46* *(2006.01)*    *G01N 21/47* *(2006.01)*

(21) Anmeldenummer: **07023733.4**

(22) Anmeldetag: **07.12.2007**

(54) **Verfahren und Vorrichtung zur Modellierung und Simulation optischer Eigenschaften von Effektstofflacken und Bestimmung von Beleuchtungs- und Messgeometrien für Spektralphotometer**

Method and device for modelling and simulating optical attributes of effect varnishes and settings for lighting and measurement geometries for spectral photometers

Procédé et dispositif de modélisation et de simulation de caractéristiques optiques de vernis à effets et détermination de géométries d'éclairage et de mesure pour photomètres spectraux

(84) Benannte Vertragsstaaten:
**DE FR IT**

(43) Veröffentlichungstag der Anmeldung:
**10.06.2009  Patentblatt 2009/24**

(73) Patentinhaber: **BASF SE**
**67056 Ludwigshafen (DE)**

(72) Erfinder:
• **Berlin, Harald, Dr.**
  **48301 Nottuln (DE)**
• **Baumeister, Clemens, Dr.**
  **48165 Münster (DE)**
• **Bornemann, Christian, Dr.**
  **48153 Münster (DE)**
• **Kallrath, Josef, Prof. Dr.**
  **67273 Weisenheim am Berg (DE)**

(74) Vertreter: **Hössle Kudlek & Partner**
**Patentanwälte**
**Postfach 10 23 38**
**70019 Stuttgart (DE)**

(56) Entgegenhaltungen:
**DE-A1- 19 652 885**    **DE-A1- 19 720 887**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Die vorliegende Beschreibung betrifft ein Verfahren und eine Vorrichtung zur Modellierung und Simulation optischer Eigenschaften von Effektstofflacken, insbesondere ein Verfahren und eine Vorrichtung zur Modellierung und Simulation optischer Eigenschaften von Effektstofflacken mit isotrop und anisotrop lichtstreuenden Pigmenten und zur Reproduktion eines Farbtons bzw. einer Rezeptur einer Tonvorlage eines Effektstofflacks.

**Hintergrund**

Für die Erstellung von Erstrezeptur- und Korrekturrechnungen von Lacken werden verschiedene physikalische Modelle, beispielsweise nach Kubelka-Munk und Giovanelli, angewandt, die eine Berechnung und Simulation der optischen Eigenschaften der Lacke ermöglichen. Diese optischen Eigenschaften werden wesentlich von der Art im Lack enthaltener Pigmente bestimmt. Man kann hierbei zwischen isotrop und anisotrop lichtstreuenden Pigmenten unterscheiden. Die isotrop lichtstreuenden Pigmente bewirken eine Mehrfachstreuung des einfallenden Lichtes, so dass eine Intensität des reflektierten bzw. gestreuten Lichtes sowohl unabhängig von einer Einstrahlrichtung des einfallenden Lichts als auch von einer Beobachtungsrichtung ist. Aufgrund der Mehrfachstreuung ist zumindest näherungsweise eine Isotropie der Intensität des reflektierten und gestreuten Lichts gegeben. Im Gegensatz dazu ist die Intensität des reflektierten Lichts bei anisotrop lichtstreuenden Pigmenten von der Einstrahlrichtung des einfallenden Lichts und der Beobachtungsrichtung abhängig, wie nachfolgend noch detailliert dargestellt wird.

Ein jeweilig angewandtes physikalisches Modell für die Berechnung und Simulation der optischen Eigenschaften von Lacken verwendet eine sogenannte Strahlungstransportgleichung (STG), in der die Lichtintensität in Abhängigkeit von den Streurichtungen der lichtstreuenden Pigmente des Lackes in Form einer Phasenfunktion beschrieben wird. Im Falle der isotrop lichtstreuenden Pigmente, wie sie in gewöhnlichen Lacken verwendet werden, ist die Phasenfunktion eine Konstante. Daher ist die Strahlungstransportgleichung, die winkel- und schichtdickenabhängig ist, näherungsweise durch ein lineares Differentialgleichungssystem mit konstanten Koeffizienten beschreibbar und kann mittels eines Eigenwertaneatzes einfach und rechenzeiteffizient gelöst werden. Die Strahlungstransportgleichung wird somit durch ein lineares Differentialgleichungssystem ersetzt. Die näherungsweise Vereinfachung dieser physikalischen Modelle ist jedoch nur für Pigmente mit isotrop lichtstreuenden Eigenschaften anwendbar.

Im Gegensatz zu den gewöhnlichen Lacken, weisen sogenannte Effektstofflacke neben den Pigmenten mit isotrop lichtstreuenden Eigenschaften zusätzlich anisotrop lichtstreuende Pigmente auf, die den entsprechenden Lacken anisotrop lichtstreuende Eigenschaften verleihen. Hierzu zählen Aluminium- und/oder Interferenzpigmente, wie beispielsweise Glimmerpartikel bzw. Glimmer, die beispielsweise bei Autolacken einen sogenannten "Perlglanzeffekt" erzeugen.

Da die Verwendung von anisotrop lichtstreuenden Pigmenten bei einer Bestrahlung der entsprechenden Lackschicht eine veränderliche Lichtintensitätsverteilung des reflektierten bzw. gestreuten Lichts zur Folge hat, die neben der Beleuchtungs- und Beobachtungsrichtung des weiteren von einer optischen Schichtdicke abhängig ist, ist in diesem Fall die Phasenfunktion im Gegensatz zu den rein isotrop lichtstreuenden Pigmenten nicht konstant. Für Effektstofflacke ist somit eine winkelabhängige Phasenfunktion anzuwenden, mit der jedoch kein einfach lösbares lineares Differentialgleichungssystem mehr vorliegt. Dieses kann nicht mehr geschlossen gelöst werden und muss folglich mit deutlich höherem numerischem Rechenaufwand behandelt werden.

**Zusammenfassung**

Die vorliegende Beschreibung schlägt daher ein Verfahren zur Verwendung eines physikalischen Modells von isotrop lichtstreuenden Pigmenten für einen Effektstofflack mit anisotrop lichtstreuenden Pigmenten vor, mit dessen Hilfe auch im Falle der anisotrop lichtstreuenden Pigmente näherungsweise ein lineares Differentialgleichungssystem mit konstanten Koeffizienten zur einfachen und rechenzeiteffizienten Lösung bereit gestellt werden kann.

Das Verfahren ermöglicht die Modellierung und Simulation optischer Eigenschaften bei Effektstofflacken, die sowohl Pigmente mit isotropen Lichtstreuungseigenschaften als auch Pigmente mit anisotropen Lichtstreuungseigenschaften umfassen, wobei die Effektstofflacke mindestens eine Stoffschicht bzw. Lackschicht auf einem geeigneten Träger bilden.

Das Verfahren ermöglicht außerdem die Reproduktion eines Farbtons einer Tonvorlage eines derartigen Effektstofflakkes, indem die optischen Eigenschaften dieser Tonvorlage mit einem Farbprüfmuster einer Rezeptur einer Lacknachbildung, wie bspw. einem Farbprüfblech, bestimmt und mittels eines Vergleichs verglichen werden. Anhand des Vergleichs wird eine Korrektur der Rezeptur der Lacknachbildung berechnet, so dass eine Übereinstimmung von Farbtönen beider Lacke - sowohl des Lacks der Tonvorlage als auch des Lacks des Farbprüfmusters bzw. der Lacknachbildung - erzielt werden kann.

Entsprechend dem vorgeschlagenen Verfahren werden die isotrop lichtstreuenden Pigmente und die anisotrop lichtstreuenden Pigmente virtuell räumlich derart getrennt, dass die isotrop lichtstreuenden Pigmente virtuell mindestens eine Stoffschicht bilden und die anisotrop lichtstreuenden Pigmente auf den Randflächen dieser Stoffschicht virtuell angeordnet werden, so dass die optischen Eigenschaften der virtuellen Stoffschicht, die aus den isotrop lichtstreuenden Pigmenten gebildet wird, mittels linearer Differentialgleichungen bestimmt werden können. Die optischen Eigenschaften der anisotrop lichtstreuenden Pigmente werden dagegen mittels bestimmter Effektstoffoperatoren als Randbedingungen für die Lösung der linearen Differentialgleichung berücksichtigt. Eine detaillierte Darstellung der Effektstoffoperatoren wird in Anhang 2 gegeben.

Die Stoffschicht kann bspw. aus einer Doppelschicht bestehen, wobei die anisotrop lichtstreuenden Pigmente auf einer inneren Randfläche der Doppelschicht virtuell angeordnet werden. Als innere Randfläche ist die Randfläche zu verstehen, die zwischen den beiden Schichten der Doppelschicht angeordnet ist.

Dies bedeutet, dass die "normalen" isotrop lichtstreuenden Pigmente entsprechend dem vorgeschlagenen Verfahren von den anisotrop lichtstreuenden Pigmenten virtuell räumlich getrennt werden. Selbstverständlich muss sich diese Trennung nicht nur auf eine virtuelle Stoffschicht oder eine Doppelschicht beschränken. Vielmehr kann die virtuelle Stoffschicht der isotrop lichtstreuenden Pigmente eine virtuelle stapelförmige Mehrschichtstruktur mit einer Anzahl von virtuellen Schichten umfassen bzw. aus dieser gebildet werden. Für jede dieser virtuellen Schichten werden die anisotrop lichtstreuenden Pigmente auf den jeweiligen Randflächen der virtuellen Schichten angeordnet.

Entsprechend einer weiteren Ausführungsform werden die anisotrop lichtetreuenden Pigmente ausschließlich auf den jeweiligen inneren Randflächen angeordnet.

Im Mittel weisen die in der Lackschicht eines Effektstofflacks eingelagerten anisotrop lichtstreuenden Pigmente bei einer senkrechten oder ringförmigen Beleuchtungsgeometrie keine Azimutabhängigkeit auf, so dass auch die Strahlungstransportgleichung azimutunabhängig behandelt werden kann. Es wird daher angenommen, dass die normalen isotrop lichtstreuenden Pigmente kontinuierlich über die virtuelle Schicht bzw. über alle virtuellen Schichten hinweg verteilt sind. Die Wirkung der anisotrop lichtstreuenden Pigmente wird dadurch unter Zuhilfenahme speziell entwickelter Effektstoffoperatoren auf die Randbedingungen des linearen Differentialgleichungssystems verlagert. Somit sind die effektstoffspezifischen Eigenschaften der anisotrop lichtstreuenden Pigmente ausschließlich an den Randflächen (ggf. nur an den inneren Randflächen) über die Randbedingungen des Differentialgleichungssystems zu berücksichtigen. Die Effektetoffoperatoren selbst können hierbei durch geeignete Matrixmultiplikationen dargestellt werden, wie exemplarisch in Anhang 2 ausführlich dargestellt.

Diese Randbedingungen wirken, wie voranstehend beschrieben, an den Randflächen (ggf. nur an den inneren Randfächen) der virtuellen Schichten. Innerhalb der virtuellen Schichten kann die Wirkung der normalen isotrop lichtstreuenden Pigmente auf diese Weise weiterhin durch die konstante Phasenfunktion der entsprechenden Strahlungstransportgleichung beschrieben werden, so dass die Einfachheit und Zeiteffizienz bei der Berechnung der Strahlungstransportgleichung auch bei diesem Verfahren erhalten bleibt. Dies erlaubt eine effektive winkelabhängige Berechnung der Strahlungstransportgleichung für Effektstofflacke mit unterschiedlichen Schichtdicken, sowie mit azimutunabhängiger Beleuchtungsrichtung.

Das Verfahren ermöglicht ferner eine Berechnung von zu dem physikalischen Modell der Simulation passenden Beleuchtungswinkeln von spektralphotometrischen Meßgeräten unter Berücksichtigung von Brechungsindizes des entsprechenden Lackes und diskreten Winkeln, die sich aus einer der zugrundeliegenden Aufgabenstellung entsprechenden Quadraturformel zur Lösung der Strahlungstransportgleichung ergeben.

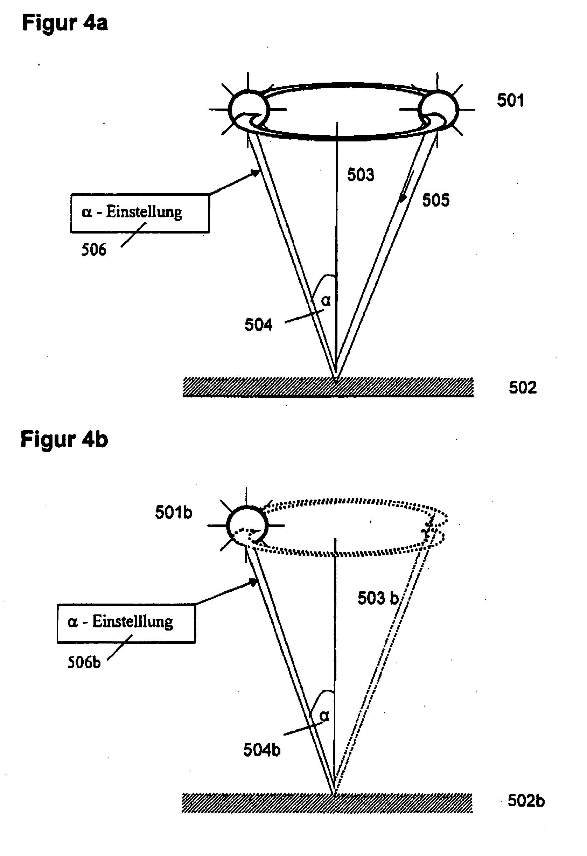

Bei der Berechnung des Beleuchtungswinkels bzw. der Beleuchtungswinkel ist ein optischer Phasenübergang bspw. von Luft zu Lack zu berücksichtigen. Dieser führt über die sogenannte "Fresnel"-Beziehung zu einer Richtungsänderung eines Strahlenganges des einstrahlenden Lichts beim Übergang in die Lackschicht. Eine Einstrahlrichtung der Beleuchtung ist hierbei so zu wählen, dass die durch den Phasenübergang geänderte Strahlrichtung in der Lackschicht mit einer Richtung, die durch die Quadraturformel vorgegeben ist, übereinstimmt. Hierbei wird auf die nachfolgend noch näher beschriebenen Figuren 4a und 4b und eine Vorrichtung 506 bzw. 506b, die zu einer Einstellung der Einstrahlrichtung vorgesehen ist, verwiesen.

Neben der Modellierung und Simulation einer einzelnen Schicht eines Effektstofflacks, die virtuell in eine Mehrschichtstruktur gegliedert wird, ist ebenfalls eine Anwendung des Verfahrens auf eine real vorhandene mehrschichtige Lackstruktur denkbar. Dies bedeutet, dass die virtuelle stapelförmige Mehrschichtstruktur einer realen Mehrechichtstruktur eines Effektstofflacke entspricht bzw. einer solchen gleichgesetzt wird. Beispielsweise kann diese reale mehrschichtige Lackstruktur aus einer elektrolytisch abgeschiedenen Grundschicht, einer Füllerlackschicht, einem Basislack sowie einem darüberliegenden Klarlack bestehen. Auch in diesem Fall können bestimmte optische Eigenschaften der Lackschichten in den Randbedingungen für die Lösung der entsprechenden linearen Differentialgleichungen berücksichtigt werden. Das beschriebene Verfahren eignet sich somit auch zur Bestimmung des Einflusses farbiger Untergründe oder eines Klarlacks auf den eigentlichen Farbton einer mehrschichtigen Lackstruktur.

Die anisotrop lichtstreuenden Pigmente, die modernen Lacken als Effektstoffe beigegeben werden, umfassen, wie voranstehend beschrieben, beilspielsweise metallische Spiegelpartikel (z.B. sogenannte "Silberdollar") oder Glimmerplättchen bzw. -partikel, die beispielsweise einen Brechungsindex von ca. n=3 aufweisen. Bei diesen anisotrop lichtstreuenden Pigmenten handelt es sich um Pigmente bzw. Partikel mit einer Größe von bis zu einigen $\mu$m, die im Vergleich zu den normalen isotrop lichtstreuenden Pigmenten mit einer Größe von ca. 0,1 $\mu$m deutlich größer ausfallen.

Die beschriebene virtuell vorzunehmende Anordnung der anisotrop lichtstreuenden Pigmente auf die Randflächen der virtuellen Schichten bewirkt, dass die anisotrop lichtstreuenden Pigmente nicht in den Differentialgleichungen behandelt werden müssen, sondern über die Randbedingungen berücksichtigt werden. Hierbei sind eine Flächenbelegungsdichte ($\eta$) der anisotrop lichtstreuenden Pigmente, deren Winkelverteilung ($\sigma$) und eine optische Schichtdicke ($\tau$) der Lackschicht bezüglich der isotrop streuenden Pigmente zu berücksichtigen. Eine detaillierte Ausführung bezüglich deren Berücksichtigung ist in Anhang 2 dargestellt.

Bei der Produktion von Lacken werden, wie voranstehend beschrieben, mit Hilfe der physikalischen Modelle die geeigneten Maßnahmen, wie beispielsweise eine Korrekturrezeptur, berechnet, mit denen die Einstellung einer Produktionscharge auf eine vorgegebene Tonvorlage bzw. Farbtonspezifikation durchgeführt werden kann. Dieses Vorgehen wird als sogenannte "Modellgestützte Prozeßsteuerung" bezeichnet.

Speziell für die Produktion von Effektstofflacken ist hierzu jedoch ein Modell, wie das hier beschriebene, erforderlich, welches die winkelabhängigen Einflüsse der anisotrop lichtstreuenden Pigmente berücksichtigen kann.

Des weiteren können bei der Produktion die optischen Eigenschaften der Effektstofflacke mittels Zusatzstoffen verändert werden, die die Winkelverteilung der anisotrop lichtstreuenden Pigmente verändern. Ferner kann die Natur der anisotrop lichtstreuenden Pigmente, die die Winkelverteilung beeinflussen, sowie die Lösungsmittelbilanz verändert werden, da die Kinetik der Verflüchtigung des Lösungsmittels die Winkelverteilung der anisotrop lichtstreuenden Pigmente beeinflusst. Auch diese Veränderungen der optischen Eigenschaften lassen sich über eine geeignete Anpassung der Randbedingungen bzw. der Effektstoffoperatoren für die anisotrop lichtstreuenden Pigmente mit dem beschriebenen Verfahren berücksichtigen.

Mit dem beschriebenen Verfahren kann somit durch reale Messungen eine Reproduktion einer Tonvorlage durchgeführt werden, indem die optischen Eigenschaften der Tonvorlage und eines Farbprüfmusters einer Rezeptur einer Lacknachbildung - beispielsweise auf einem Farbprüfblech aus einem Produktionsanfall - gemessen und verglichen werden, wobei aus der Differenz eine Korrekturrezeptur berechnet und simuliert wird.

Des weiteren kann somit mit dem beschrieben Verfahren ebenfalls eine virtuelle Simulation einer Farbrezeptur für einen bestimmten Lack bzw. für einen Farbton des Lacks durchgeführt werden, indem die physikalischen Parameter Konzentration und optische Konstanten (K,S) der Pigmente und somit deren optische Schichtdicke, die Konzentration der anisotrop lichtstreuenden Pigmente und damit deren Flächenbelegungsdichte, Winkelverteilung, Pigment- bzw. Partikelgrösse und Dicke sowie die Brechungsindices zur Berücksichtigung von optischen Phasenübergängen wahlweise virtuell kombiniert werden.

Dies bedeutet, dass mit dem beschriebenen Verfahren zur Simulation einer Farbrezeptur die optischen Eigenschaften einer Anzahl von bekannten Tonvorlagen wahlweise virtuell kombiniert werden können und somit die optischen Eigenschaften einer bekannten Tonvorlage auf Basis physikalischer Parameter von Farbstoffen nachgebildet werden können.

Des weiteren stellt die vorliegende Beschreibung eine Vorrichtung zur Verwendung des beschriebenen Verfahrens mit einer im wesentlichen realen oder virtuellen, gleichmäßigen Beleuchtung mit paralleler Einstrahlung unter einem bestimmten Einfalls- bzw. Beleuchtungswinkel bereit. Eine solche gleichmäßige Beleuchtung kann beispielswiese mit einer ringförmigen Lichtquelle erzielt werden. Des weiteren umfasst die Vorrichtung Mittel zur Festlegung einer Beleuchtungsgeometrie. Hierzu umfasst die Vorrichtung Mittel zur Bestimmung des Einfallswinkels der Beleuchtung, die in Anhang 3 näher beschrieben werden. Der wesentliche Vorteil einer senkrechten oder ringförmigen Beleuchtungsgeometrie besteht darin, dass die in der Lackschicht eingelagerten anisotrop lichtstreuenden Pigmente bzw. Effektstoffpigmente bei diesen Beleuchtungsgeometrien im Mittel keine Azimutabhängigkeit aufweisen, so dass auch die Strahlungstransportgleichung azimutunabhängig behandelt werden kann.

Weitere Ausgestaltungen des vorgeschlagenen Ansatzes ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Im Folgenden sind mögliche Ausführungsbeispiele in der Zeichnung schematisch dargestellt und unter Bezugnahme auf die Zeichnung ausführlich beschrieben.

Figur 1      zeigt einen Querschnitt einer Schicht eines Ef- fektstofflackes mit anisotrop und isotrop licht- streuenden Pigmenten.

Figur 2      zeigt einen Querschnitt einer realen mehrschich- tigen Lackstruktur.

Figur 3        zeigt einen Querschnitt einer virtuellen mehr- schichtigen Lackstruktur mit auf inneren Randflä- chen angeordneten anisotrop lichtstreuenden Pig- menten.

Figur 4a      zeigt eine schematische Darstellung einer Vor- richtung zur Anwendung einer ringförmigen Be- leuchtung.

Figur 4b      zeigt eine schematische Darstellung einer Vor- richtung zur Anwendung einer vituellen ringförmi- gen Be- leuchtung.

Figur 5        zeigt ein Flussdiagramm eines Ablaufs zur Repro- duktion einer Tonvorlage.

Figur 6        zeigt ein Flussdiagramm eines Ablaufs zur Erstel- lung einer Modellierung und Simulation einer neu- en Farbrezeptur.

Figur 7        zeigt die Intensität einer Einstrahlung in Abhän- gigkeit von der Schichtdicke eines Lacks gemäß einem Modell für isotrop lichtstreuende Pigmente.

Figur 8        zeigt die Intensität einer Einstrahlung in Abhän- gigkeit von der Schichtdicke eines Effektstoff- lacks nach einem offenbarungsgemäßen Modell für anisotrop lichtstreuende Pigmente.

Figur 9        zeigt eine vervollständigte Messindikatrix bei Anwendung einer einzelnen Beleuchtung.

Figur 10      zeigt eine Simulation eines Mesoverlaufs bei ei- ner virtuellen ringförmigen Beleuchtung.

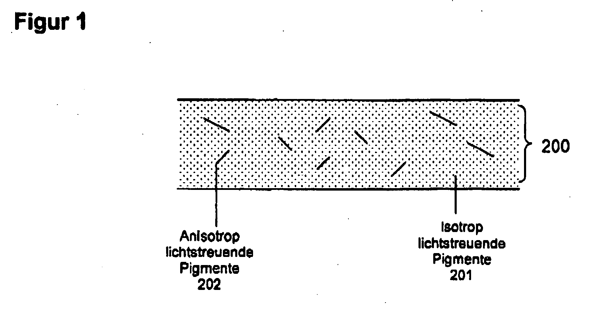

Figur 1 zeigt einen Querschnitt einer Schicht 200 eines Effektstofflackes mit innerhalb einer Lackschicht angeordneten anisotrop lichtstreuenden Pigmenten bzw. Effektstoffpigmenten 202 und isotrop lichtstreuenden Pigmenten 201. Die Lackschicht umfasst somit eine Kombination aus anisotrop 202 und isotrop 201 lichtstreuenden Pigmenten. Die anisotrop lichtstreuenden Pigmente 202 sind unregelmäßig bzw. zufällig innerhalb der Lackschicht verteilt und weisen im Vergleich zu den isotrop lichtetreuenden Pigmenten deutlich größere Abmessungen auf.

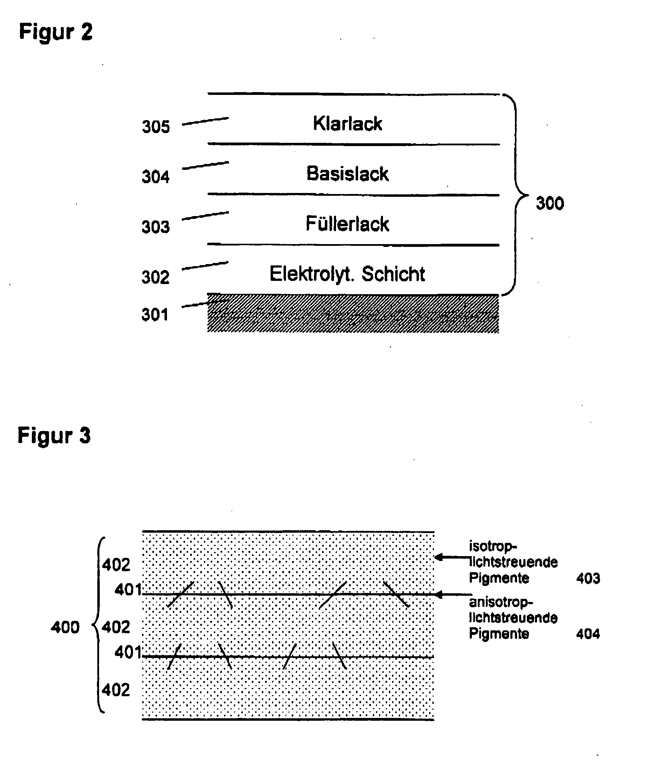

Figur 2 zeigt einen Querschnitt einer realen mehrschichtigen Lackstruktur 300 auf einem Trägermaterial 301. Diese Lackstruktur 300 besteht aus einer elektrolytisch abgeschiedenen Grundschicht 302, einer Füllerlackschicht 303, einem Basislack 304 sowie einem darüberliegenden Klarlack 305. Auch in diesem Fall können bestimmte optische Eigenschaften der Schichten 302, 303, 304 und 305 in Randbedingungen bei einer Lösung linearer Differentialgleichungen berücksichtigt werden. Es ist somit möglich, Einflüsse farbiger Untergründe 302, 303 oder Einflüsse des Klarlacks 305 auf den eigentlichen Farbton des Basislacks 304 bzw. der mehrschichtigen Lackstruktur 300 zu bestimmen.

Figur 3 zeigt eine virtuelle mehrschichtige Lackstruktur 400, die in isotrop lichtstreuende Schichten 402 aufgeteilt ist, in denen ausschließlich isotrop lichtstreuende Pigmente 403 angeordnet sind. Auf Randflächen 401 der isotrop lichtstreuenden Schichten 402 sind dagegen anisotrop lichtstreuenden Pigmente bzw. Effektstoffpigmente 404 virtuell angeordnet. Die Anordnung der anisotrop lichtstreuenden Pigmente 404 in dieser virtuellen mehrschichtigen Lackstruktur 400 bzw. auf den Randflächen 401 der Schichten 402 bewirkt, dass die anisotrop lichtstreuenden Pigmente 404 nicht in Differentialgleichungen behandelt werden müssen, sondern über Randbedingungen berücksichtigt werden können und somit ein Lösen der Differentialgleichungen vereinfachen. Die Anzahl der Schichten der mehrschichtigen Lackstruktur 400 kann dabei beliebig gewählt und an gegebene Anforderungen angepasst werden.

Figur 4a zeigt eine schematische Darstellung einer Vorrichtung zur Anwendung einer ringförmigen Beleuchtung 501. Hierbei wird eine im Winkel $\alpha$ 504 bzgl. einer Normalen 503 einer Lackfläche 502 ausgerichtete parallele Ringeinstrahlung 505 bereitgestellt. Der Winkel $\alpha$ 504 stellt somit einen Einfallswinkel dar und kann z. B. über eine Vorrichtung 506, die in Anhang 3 näher beschrieben wird, entsprechend einem zugrundeliegenden physikalischen Modell eingestellt werden. Aufgrund einer senkrechten oder ringförmigen Beleuchtungsgeometrie weisen die in der Lackfläche 502 bzw. der Lackschicht eingelagerten anisotrop lichtstreuenden Pigmente bei dieser Beleuchtungsgeometrie im Mittel keine Azimutabhängigkeit auf, so dass auch eine Strahlungstransportgleichung azimutunabhängig behandelt werden kann.

Figur 4b zeigt eine Vorrichtung analog zu Figur 4a, wobei die ringförmige Beleuchtung virtuell durch eine ringförmige Überlagerung einer realen parallelen Einzelbeleuchtung 501b mit Einfallswinkel $\alpha$ 504b erzeugt wird. Mit einer Vorrichtung 506b, die ebenfalls in Anhang 3 näher beschrieben wird, kann dieser Winkel $\alpha$ 504b entsprechend dem physikalischen bzw. mathematischen Modell zur Berechnung eingestellt werden.

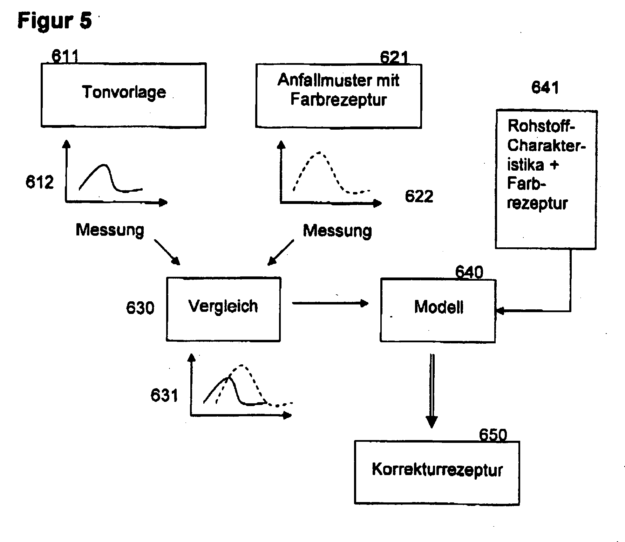

Figur 5 zeigt ein Flussdiagramm eines Ablaufs zur Reproduktion eines Farbtons einer Tonvorlage 611 eines Effektstofflackes. Hierbei werden optische Eigenschaften der Tonvorlage 611 und einer Lacknachbildung 621 (Anfallmuster bzw. Farbprüfmuster) in einer Messung 612 bzw. 622 mit dem beschriebenen Verfahren bestimmt und verglichen 630, so dass durch eine Korrekturrechnung anhand eines dem Verfahren zugrundeliegenden Modells 640 eine Korrekturrezeptur 650 der Lacknachbildung 621 bereitgestellt werden kann, mit deren Hilfe eine Übereinstimmung des Farbtons der Tonvorlage 611 und eines Farbtons der Lacknachbildung 621 erzielt werden kann. Hierzu werden in einem ersten Schritt die optischen Eigenschaften der Tonvorlage 611 mit dem beschriebenen Verfahren bestimmt und als sogenannter Sollwert bzw. in Form einer Sollkurve 612 hinterlegt. Anschließend werden die optischen Eigenschaften einer Lacknachbildung 621, die als Anfallmuster unter Anwendung einer vorläufigen Farbrezeptur erstellt wurde, ebenfalls mit dem dargestellten Verfahren gemessen und die Meßwerte 622 mit dem Sollwert 612 der Tonvorlage 611 verglichen. Weichen die beiden Messungen 612, 622 voneinander ab, kann mit dem dargestellten Verfahren eine Korrekturrezeptur 650 basierend auf dem dargestellten Modell 640 berechnet und simuliert werden. Mit Hilfe dieser Korrekturrezeptur 650 kann der Farbton der Lacknachbildung 621 in Übereinstimmung mit jenem der Tonvorlage 611 gebracht werden.

Neben der Reproduktion von bestehenden Tonvorlagen eignet sich der beschriebene Ablauf bzw. das beschriebene Verfahren ebenso zur Modellierung und Simulation neuer Farbrezepturen.

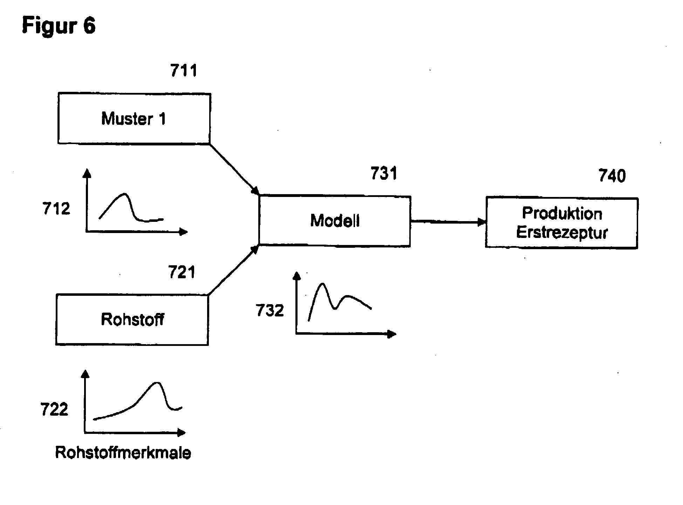

Figur 6 zeigt ein Flussdiagramm eines Ablaufs zur Modellierung und Simulation einer neuen Farbrezeptur bzw. Erstrezeptur 740. Hierzu wird anhand einer Messung 712 eines neuen Farbtonmusters 711 eine entsprechende Farbrezeptur mit einem beschriebenen Modell 731 und Merkmalen 722 eigener Rohstoffe 721 berechnet. Auf diese Weise kann entsprechend dem zugrundeliegenden Modell 731 virtuell eine neue Farbrezeptur bzw. Erstrezeptur dargestellt werden, deren Zusammensetzung 732 hiermit genau bekannt ist. Insbesondere eignet sich dieser Ablauf bzw. dieses Verfahren in der beschriebenen Art und Weise für eine Modellierung und Simulation von Effektstofflacken bzw. deren Farbrezeptur.

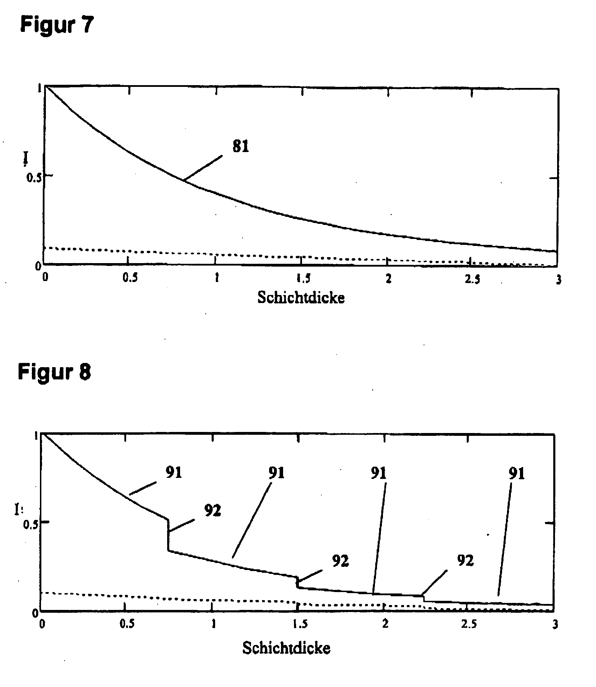

Figur 7 zeigt eine Intensität einer Einstrahlung bzw. Beleuchtung in Abhängigkeit von einer Schichtdicke eines Lacks gemäß einem Modell für isotrop lichtstreuende Pigmente. Deutlich erkennbar ist ein stetig abnehmender Verlauf 81 der Intensität mit zunehmender Schichtdicke. Die optischen Eigenschaften lassen sich mit diesem Modell näherungsweise durch ein lineares Differentialgleichungssystem mit konstanten Koeffizienten beschreiben, das vergleichsweise einfach und rechenzeiteffizient gelöst werden kann.

Figur 8 zeigt eine Intensität einer Einstrahlung bzw. Beleuchtung in Abhängigkeit von einer Schichtdicke eines Effektstofflacks anhand eines offenbarungsgemäßen Modells für anisotrop lichtstreuende Pigmente. Hiernach werden optische Eigenschaften der anisotrop lichtstreuenden Pigmente auf Randflächen berücksichtigt. Charakteristisch ist ein lediglich abschnittsweise stetig abnehmender Verlauf der Intensität. In diesen Abschnitten mit stetigem Verlauf 91 werden die optischen Eigenschaften der isotrop lichtstreuenden Pigmente mittels linearer Differentialgleichungen beschrieben. An Randflächen zwischen den Schichten werden über entsprechend angepasste Randbedingungen effektetoffspezifische Eigenschaften der anisotrop lichtstreuenden Pigmente berücksichtigt, die sich durch "Stufen" 92 im Kurvenverlauf der Intensität abzeichnen.

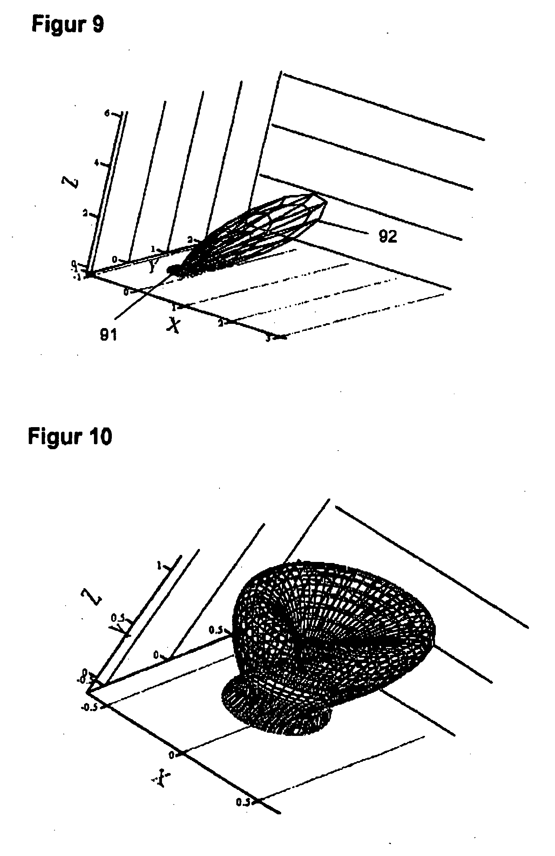

Figur 9 zeigt eine vervollständigte Messindikatrix bei Anwendung einer einzelnen Beleuchtung unter einem bestimmten Einfallswinkel, wobei die Messindikatrix sowie deren Bestimmung in Anhang 3 näher beschrieben sind. Die dargestellte x-y Ebene stellt hierbei eine Oberfläche des Lacks dar, die den Lack gegenüber der Umwelt bzw. der umgebenden Luft abgrenzt. Die dargestellte z-Koordinate weißt dabei in Richtung der Dicke des Lacks bzw. der Lackschicht. Mit 91 ist ein kleiner Bereich im Bereich der x-y Ebene der Messindikatrix gekennzeichnet, der durch die isotrop lichtstreuenden Pigmente hervorgerufen wird. Der restliche sich räumlich innerhalb der Lackschicht erstreckende Teil 92 der Messindikadrix wird dagegen durch die anisotrop lichtstreunenden Pigmente verursacht.

Figur 10 zeigt eine Simulation eines Messverlaufs bei einer virtuellen ringförmigen Beleuchtung durch eine Überlagerung der vervollständigten Messindikatrix aus Figur 9 für eine Anzahl von n Azimutwinkeln der einzelnen Beleuchtungsquelle, die auf diese Weise die virtuelle ringförmige Beleuchtung bereitstellt. Eine nähere Beschreibung der Simulation ist in Anhang 3 gegeben.

Die virtuelle Modellierung, Simulation und Reproduktion von Farbtönen und den entsprechenden Farbrezepturen ermöglicht eine vergleichsweise schnelle und einfache Möglichkeit neue Tonvorlagen bzw. Farbtöne und Kombinationen von Farben insbesondere von übereinanderliegenden Farbschichten zu testen, bevor reale Farben gemischt werden müssen. Insbesondere kann dieses Vorgehen mittels des beschriebenen Verfahrens auch für Effektstofflacke mit anisotrop lichtstreuenden Pigmenten verwendet werden. Das Verfahren stellt somit eine Möglichkeit bereit, Rohstoffe und Materialkosten, sowie Personalkosten einzusparen, die bei einer ansonsten experimentellen realen Mischung der Farbtöne entstehen würden.

Anhang 1

Detaillierte Darstellung der Strahlungstransportgleichung

Eine allgemeine Form einer Strahlungstransportgleichung (STG) ist eine Integro-Differential-Gleichung, die wie folgt dargestellt werden kann:

$$\mu \frac{dI(\tau,\mu,\varphi)}{d\tau} = I(\tau,\mu,\varphi) - \frac{1}{4\pi} \int_{-1}^{+1} \int_{0}^{+2\pi} p(\tau;\mu,\varphi;\mu',\varphi') I(\tau,\mu',\varphi') d\mu' d\varphi'$$

$$(1.1)$$

Hierin stellt

**I**     eine gesuchte Strahlungsdichte,

**p**     eine Phasenfunktion,

$\tau$     eine optische Dicke und

b$\varphi$     einen Azimutwinkel dar.

b$\mu$ ergibt sich aus einem Höhenwinkel $\vartheta$ über die Beziehung:

$$\mu = \cos(\vartheta)$$

$$(1.2)$$

Im Fall einer Rotationssymmetrie der Beleuchtung und Konstanz der Phasenfunktion **p**, mit **p** = $\omega$, vereinfacht sich die STG zu:

$$\mu \frac{dI(\tau,\mu)}{d\tau} = I(\tau,\mu) - \frac{1}{2}\omega \int_{-1}^{+1} I(\tau,\mu') d\mu'$$

$$(1.3)$$

Löst man das Integral auf der rechten Seite der STG (näherungsweise) mit einer numerischen Qadraturformel mit n Stützstellen in einem Interval [-1,1] z.B. nach Gauß-Radau, so erhält man ein lineares Differentialgleichungssystem mit konstanten Koeffizienten $a_{i,j}$, **i**, j = 1,..., n.

Ordnet man die Koeffizienten in kanonischer Weise in einer Matrix an, schreibt sich diese Differentialgleichung (DGL) in der Form:

$$\frac{dI}{d\tau} = I' = AI$$

$$(1.4)$$

Die Lösung dieser DGL lautet (analog zu einem eindimensionalen Fall n = 1):

$$I(\tau) = \exp(A \tau) * I(\tau=0)$$

$$(1.5)$$

Die Berechnung der (mehrdimensionalen) Exponentialfunktion "exp()" kann mit Standardmethoden der linearen Algebra über Eigenwerte bzw. Eigenvektoren der Matrix A erfolgen, so dass man eine geschlossene, näherungsweise Lösung der STG erhält.

Anhang 2

**Detaillierte Darstellung des Effektstoffoperators:**

Löst man die in Anhang 1 dargestellte Strahlungstranaportgleichung (STG) für "normale" Lacke, (d.h. die farbgebenden isotrop lichtstreuenden Pigmente sind kontinuierlich über die Lackschicht verteilt), indem man das Integral der STG mit einer numerischen Quadraturformel annähert und somit, wie in Anhang 1 beschrieben, die STG durch ein lineares Differentialgleichungssystem mit konstanten Koeffizienten ersetzt, sind an Randseiten bzw. an einer äußeren Oberfläche des Lacks hinreichende Randwerte vorzugeben, die eine Strahlungsintensität der Beleuchtung berücksichtigen.

Im Falle von Effektstofflacken sind zusätzlich aufgrund des verwendeten Modells an inneren virtuellen Grenzflächen bzw. Randflächen, auf denen die Effektstoffe angeordnet sind, Randbedingungen bzw. Anschlußbedingungen zu formulieren.

Bezeichnet man einen n-dimensionalen Intensitätvektor **I** in der in Anhang 1 dargestellten linearen DGL (1.5) oberhalb einer Grenzschicht bzw. Randfläche mit I_S1 und unterhalb von dieser mit I_S2, und bezeichnet man die ersten n/2 Komponenten des n-dimensionalen Intensitätsvektors I, die einem aufwärts gerichteten Strahl bzw. Lichtstrahl der Beleuchtung zugeordnet sind, jeweils mit einem Index "up" sowie die restlichen n/2 Komponenten mit "dn", so ergeben sich bspw. die folgenden Intensitätsvektoren:

$$I\_S1 := \begin{pmatrix} I\_S1_{up} \\ I\_S1_{dn} \end{pmatrix} \qquad I\_S2 := \begin{pmatrix} I\_S2_{up} \\ I\_S2_{dn} \end{pmatrix} \tag{2.1}$$

Es sind dann für die optische Dicke $\tau$ an der inneren Grenzfläche bzw. Randfläche folgende "inneren" Rand- bzw. Kontinuitätsbedingungen einzuhalten:

$$I\_S1_{up} = \eta\, SPR\, I\_S1_{dn} + (1 - \eta)\, I\_S2_{up} + \eta * SPL * I\_S2_{up} \tag{2.2}$$

$$I\_S2_{dn} = \eta\, SPR\, I\_S2_{up} + (1 - \eta)\, I\_S1_{dn} + \eta * SPL * I\_S1_{dn} \tag{2.3}$$

Hierbei stellen "SPR" und "SPL" (n/2 x n/2)-Matrizen dar, die bspw. für einen Fall n = 8 folgendermaßen definiert sind:

$$SPL := \begin{pmatrix} p_2 & p_3 & p_4 & 0 \\ p_3 & p_4 & 0 & 0 \\ p_4 & 0 & 0 & 0 \\ 0 & 0 & 0 & 0 \end{pmatrix} \qquad SPR := \begin{pmatrix} 0 & 0 & 0 & p_1 \\ 0 & 0 & p_1 & p_2 \\ 0 & p_1 & p_2 & p_3 \\ p_1 & p_2 & p_3 & p_4 \end{pmatrix} \tag{2.4}$$

Der entsprechende allgemeine Fall für n ergibt sich analog in offensichtlicher Weise.

Die Matrizen weisen allgemeine Matrixkoeffizienten $p_i$ auf, die eine Winkelverteilung der anisotrop lichtstreuenden Pigmente bzw. Effektstoffpigmente repräsentieren. Der Parameter $\eta$ repräsentiert deren Flächenbelegungsdichte.

Durch kanonische algebraische Umformungen lassen sich die Kontinuitätsbedingungen mit einer (n x n) Matrix **M** in der kompakten Matixschreibweise

$$\mathtt{I\_S2} = \mathtt{M}\ \mathtt{I\_S1}$$

darstellen. Diese Matrix **M** wird als Effektstoffoperator bezeichnet.

Anhang 3

**Beschreibung zu den Mitteln zur Bestimmung einen Einfallwinkels einer Beleuchtung:**

Für eine Verwendung von Mitteln zur Bestimmung eines Einfallwinkels einer Beleuchtung muss zunächst der geeignete Einfallwinkel $\alpha$ der Beleuchtung bestimmt werden. Hierzu muss beachtet werden, dass das einfallende Licht der Beleuchtung auf ein Messobjekt im Falle eines vorliegenden optischen Phasenübergangs, beispielsweise zwischen der umgebenden Luft ($n_0$=1) und einem Lack bzw. eines ausgehärteten Lackbindemittels ($n_1$=1,5), in seiner Ausbreitungsrichtung beim Durchtritt durch eine dazugehörige Phasengrenze abgelenkt bzw. verzerrt wird. Anhand vorgegebener Brechungsindizes der vorliegenden Medien an dem Phasenübergang kann zunächst mit Hilfe der sogenannten "Fresnel"-Beziehung und einer entsprechenden Quadraturformel mindestens ein geeigneter Einfallwinkel $\alpha$ berechnet werden.

Bei spektralphotometrischen Messgeräten, die über die Mittel zur Bestimmung des Einfallswinkels der Beleuchtung verfugen, kann dieser berechnete Beleuchtungswinkel eingestellt werden. Allgemein erhältliche Messgeräte verfügen jedoch nicht über derartige Mittel zur Bestimmung des Einfallwinkels sondern weisen einen festen Einfallswinkel der Beleuchtung auf. Dies hat zur Folge, dass ein entsprechendes Messgerät mit einem festen Einfallswinkel verwendet werden muss, der dem mittels der Quadraturformel und "Fresnel"-Beziehung berechneten Einfallwinkel möglichst ähnlich ist.

Die Mittel zur Bestimmung des Einfallswinkels der Beleuchtung sind in Figur 4a und 4b schematisch als Vorrichtung 506 und 506b gekennzeichnet.

Erfolgt die Beleuchtung gemäß der Beschreibung zu Figur 4b mittels einer virtuellen Beleuchtung, so wird die Einstellung des Einfallwinkels $\alpha$ analog zu der voranstehenden Beschreibung vorgenommen.

Zusätzlich wird bei Verwendung einer virtuellen Ringbeleuchtung die Messung um weitere Schritte ergänzt. Eine virtuelle Ringbeleuchtung bezeichnet eine einzelne, beispielsweise punktförmige Beleuchtung, die unter einem bestimmten Einfallswinkel aus einer bestimmten Richtung bzw. unter einem bestimmten Azimutwinkel auf das Messobjekt strahlt und auf einer ringförmigen Bahn um das Messobjekt bei gleichbleibendem Einfallswinkel, aber veränderlichem Azimutwinkel gedreht wird. Statt der Verwendung einer ringfömigen Beleuchtung bzw. Lichtquelle kann somit eine ringförmige Beleuchtung virtuell durch die einzelne Beleuchtung ersetzt werden.

Es wird zunächst eine Messung der Intensität des von dem Messobjekt reflektierten Lichtes außerhalb des Messobjekts bei einem konstanten Einfallswinkel und einem konstanten Azimutwinkel durchgeführt. Über eine Transformation der sich aus der Messung ergebenden Messwerte können mit Hilfe der "Fresnel"-Beziehung die zu den Messwerten gehörenden Werte der Intensität innerhalb des Lacks des Messobjekts ermittelt werden. Hierbei werden beispielsweise nur einige wenige Messwerte gemessen bzw. einige wenige dazugehörige Intensitätswerte bestimmt.

In einem weiteren Schritt kann eine Anpassung bzw. "Fit" einer geeigneten sogenannten "Fit"-Funktion an die Intensitätswerte sowie eine Ergänzung virtueller Intensitätswerte erfolgen, die mittels einer geeigneten Rotation der "Fit"-Kurve um einen Glanzwinkel eine sogenannte vervollständigte "innere" Messindikatrix bilden.

Dies bedeutet, dass aus den außerhalb des Messobjekts gemessenen Messwerten zunächst durch Transformation die innerhalb des Lacks des Messobjekts vorhandenen Intensitätswerte bestimmt werden, die durch die "Fit"-Funktion approximiert werden. Durch Rotation um den ins Innere des Lacks transformierten Glanzwinkel wird eine dreidimensionale Intensitätsverteilung bzw. die Messindikatrix berechnet. Der Glanzwinkel gibt hierbei einen Reflexionswinkel vergleichbar einem Scheinwerfer vor, der durch eine Reflexion des einfallenden Lichtes an der glatten Oberfläche des Lacks bestimmt wird. Ein Beispiel einer vervollständigten "inneren" Messindikatrix ist in Figur 9 abgebildet. Die Bezeichnung "innere" kennzeichnet dabei, dass es sich um eine Intensitätsverteilung handelt, die "innerhalb" des Lacks auftritt, jedoch nicht Bestandteil der von außen durchgeführten Messung ist.

Die "Fit"-Funktion kann beispielsweise wie folgt dargestellt werden:

$$a \cdot \exp(\frac{\theta^2}{2s^2}) + b$$

Hierin stellt θ einen zugehörigen Öffnungswinkel der Messindikatrix innerhalb der Lackschicht dar.

Anschließend erfolgt eine Simulation eines Messverlaufs bei einer Verwendung einer virtuellen ringförmigen Beleuchtung. Diese Simulation erfolgt durch eine Überlagerung der vervollständigten Messindikatrix, die für einen bestimmten Azimutwinkel erstellt wurde, für eine Anzahl n von verschiedenen Azimutwinkeln. Die Überlagerung der Messindikadtrix für verschiedene Azimutwinkel entspricht somit einer Rotation der verwendeten Beleuchtung auf einer ringförmigen Bahn um das Messobjekt, so dass eine Beleuchtung aus verschiedenen Azimutwinkeln bzw. somit eine virtuelle ringförmige Beleuchtung simuliert wird. In Figur 10 ist eine Abbildung einer derartigen Simulation bzw. eines Messverlaufs bei virtueller ringförmiger Beleuchtung mit n=36 gegeben.

## Patentansprüche

1. Verfahren zur Modellierung und Simulation optischer Eigenschaften bei Effektstofflacken, die Pigmente mit isotropen Lichtstreuungseigenschaften und Pigmente mit anisotropen Lichtstreuungseigenschaften umfassen, wobei die Effektstofflacke mindestens eine Stoffschicht bzw. Lackschicht auf einem geeigneten Träger bilden, und zur Reproduktion eines Farbtons einer Tonvorlage eines derartigen Effektstofflacks, wobei die optischen Eigenschaften der Tonvorlage und eines Farbprüfmusters einer Rezeptur einer Lacknachbildung bestimmt und mittels eines Vergleichs verglichen werden, so dass anhand des Vergleichs eine Korrektur der Rezeptur der Lacknachbildung und eine Übereinstimmung von Farbtönen der Tonvorlage und der Lacknachbildung erzielt werden kann, **dadurch gekennzeichnet, dass** die isotrop lichtstreuenden Pigmente und die anisotrop lichtstreuenden Pigmente virtuell räumlich derart getrennt werden, dass die isotrop lichtstreuenden Pigmente virtuell die Stoffschicht bilden und die anisotrop lichtstreuenden Pigmente auf Randflächen der Stoffschicht virtuell angeordnet werden, so dass die optischen Eigenschaften der virtuellen Stoffschicht, die aus den isotrop lichtstreuenden Pigmenten gebildet wird, mittels linearer Differentialgleichungen bestimmt werden und die optischen Eigenschaften der anisotrop lichtstreuenden Pigmente mittels bestimmter Effekstoffoperatoren als Randbedingungen des Differentialgleichungssystems berücksichtigt werden.

2. Verfahren nach Anspruch 1, wobei die virtuelle Stoffschicht der isotrop lichtstreuenden Pigmente eine virtuelle stapelförmige Mehrschichtstruktur mit einer Anzahl von virtuellen Schichten umfasst, wobei für jede dieser virtuellen Schichten die anisotrop lichtstreuenden Pigmente auf den jeweiligen Randflächen der virtuellen Schichten angeordnet werden.

3. Verfahren nach Anspruch 2, wobei die virtuelle stapelförmige Mehrschichtstruktur einer realen Mehrschichtstruktur eines Effektstofflacks entspricht.

4. Vorrichtung zur Durchführung des Verfahrens nach einem der voranstehenden Ansprüche 1 bis 3, mit einer im wesentlichen realen oder virtuellen gleichmäßigen Beleuchtung mit paralleler Einfallsrichtung, wobei die Vorrichtung Mittel zur Bestimmung eines Einfallswinkels der Beleuchtung umfasst.

5. Verfahren zur Reproduktion einer Tonvorlage mittels des Verfahrens nach einem der Ansprüche 1 bis 3, bei dem die optischen Eigenschaften der Tonvorlage und des Farbprüfmusters einer Rezeptur einer Lacknachbildung gemessen und verglichen werden, wobei aus der Differenz eine Korrekturrezeptur berechnet und simuliert wird.

6. Verfahren zur Simulation einer Farbrezeptur mittels des Verfahrens nach einem der Ansprüche 1 bis 3, bei dem die optischen Eigenschaften einer bekannten Tonvorlage auf Basis physikalischer Parameter von Farbrohstoffen nachgebildet werden.

## Claims

1. Method for modelling and simulating optical characteristics in the case of effect material varnishes which comprise pigments with isotropic light-scattering properties and pigments with anisotropic light-scattering properties, the effect material varnishes forming at least one material layer or varnish layer on a suitable substrate, and for reproducing a shade of a shade original of such an effect material varnish, wherein the optical properties of the shade original and a colour proof pattern of a formulation of a varnish simulation are determined and compared by means of a comparison such that with the aid of the comparison it is possible to attain a correction of the formulation of the varnish simulation and a correspondence of shades of the shade original and the varnish simulation, **characterized in that** the isotropically light-scattering pigments and the anisotropically light-scattering pigments are separated in space virtually in such a way that the isotropically light-scattering pigments form the material layer in a virtual fashion, and the anisotropically light-scattering pigments are arranged in a virtual fashion on edge surfaces of the material layer such that the optical properties of the virtual material layer which is formed from the isotropically light-scattering pigments are determined by means of linear differential equations, and the optical properties of the anisotropically light-scattering pigments are taken into account by means of specific effect material operators as boundary conditions of the system of differential equations.

2. Method according to claim 1, in which the virtual material layer of the isotropically light-scattering pigments comprises a virtual stack-like multilayer structure with a number of virtual layers, in which case for each of these virtual layers the anisotropically light-scattering pigments are arranged on the respective edge surfaces of the virtual layers.

3. Method according to claim 2, in which the virtual stack-like multilayer structure corresponds to a real multilayer structure of an effect material varnish.

4. Device for carrying out the method according to any one of the preceding claims 1 to 3, having a substantially real or virtual uniform illumination with parallel incidence direction, in which the device comprises means for determining an incidence angle of the illumination.

5. Method for reproducing a shade original by means of the method according to any one of claims 1 to 3, in which the optical properties of the shade original and of the colour proof pattern of a formulation of a varnish simulation are measured and compared, a correction formulation being calculated from the difference and simulated.

6. Method for simulating a colour formulation by means of the method according to one of claims 1 to 3, in which the optical properties of a known shade original are simulated on the basis of physical parameters of colour raw materials.

**Revendications**

1. Procédé de modélisation et de simulation des propriétés optiques de vernis à effets, qui comprennent des pigments ayant des propriétés de dispersion de lumière isotropes et des pigments ayant des propriétés de dispersion de lumière anisotropes, dans lequel les vernis à effets forment au moins une couche de substance ou une couche de vernis sur un support adéquat, et de reproduction d'une nuance de couleur d'un modèle de nuance d'un tel vernis à effets, dans lequel les propriétés optiques du modèle de nuance et d'un échantillon colorimétrique d'une formulation d'une simulation de vernis sont déterminées et comparées au moyen d'une comparaison, de sorte que la comparaison permet d'obtenir une correction de la formulation de la simulation de vernis et une concordance des nuances de couleur du modèle de nuance et de la simulation de vernis, **caractérisé en ce que** les pigments à dispersion de lumière isotrope et les pigments à dispersion de lumière anisotrope sont séparés virtuellement dans l'espace de telle sorte que les pigments à dispersion de lumière isotrope forment virtuellement la couche de substance et les pigments à dispersion de lumière anisotrope sont disposés virtuellement sur des zones périphériques de la couche de substance, de sorte que les propriétés optiques de la couche de substance virtuelle qui est formée par les pigments à dispersion de lumière isotrope sont déterminées au moyen d'équations différentielles linéaires et les propriétés optiques des pigments à dispersion de lumière anisotrope sont prises en considération comme des conditions aux limites du système d'équations différentielles, au moyen de certains opérateurs de substance à effets.

2. Procédé selon la revendication 1, dans lequel la couche de substance virtuelle des pigments à dispersion de lumière isotrope comprend une structure multicouche virtuelle en forme d'empilement avec un certain nombre de couches virtuelles, dans lequel pour chacune de ces couches virtuelles, les pigments à dispersion de lumière anisotrope sont disposés sur les surfaces périphériques respectives des couches virtuelles.

3. Procédé selon la revendication 2, dans lequel la structure multicouche virtuelle en forme d'empilement correspond à une structure multicouche réelle d'un vernis à effets.

4. Dispositif pour la réalisation du procédé selon l'une quelconque des revendications précédentes 1 à 3, comprenant un éclairage homogène substantiellement réel ou virtuel avec une direction d'incidence parallèle, dans lequel le dispositif comprend des moyens pour déterminer un angle d'incidence de l'éclairage.

5. Dispositif pour la reproduction d'un modèle de nuance au moyen du procédé selon l'une quelconque des revendications 1 à 3, dans lequel les propriétés optiques du modèle de nuance et de l'échantillon colorimétrique d'une formulation d'une simulation de vernis sont mesurées et comparées, dans lequel une formulation corrective est calculée et simulée à partir de la différence.

6. Procédé pour la simulation d'une formulation de peinture au moyen du procédé selon l'une quelconque des revendications 1 à 3, dans lequel les propriétés optiques d'un modèle de nuance connu sont simulées sur la base de paramètres physiques de matières premières de peinture.

**Figur 1**

Anisotrop
lichtstreuende
Pigmente
202

Isotrop
lichtstreuende
Pigmente
201

200

# Figur 2

305 — Klarlack

304 — Basislack

303 — Füllerlack

302 — Elektrolyt. Schicht

301 —

300

# Figur 3

402

401

402

401

402

400

isotroplichtstreuende
Pigmente          403

anisotroplichtstreuende
Pigmente          404

## Figur 4a

α - Einstellung

501

503

505

506

α

504

502

## Figur 4b

501b

α - Einstelllung

503 b

506b

α

504b

502b

## Figur 5

611 **Tonvorlage**

621 **Anfallmuster mit Farbrezeptur**

641 **Rohstoff-Charakter-istika + Farb-rezeptur**

612 Messung

622 Messung

630 **Vergleich**

640 **Modell**

631

650 **Korrekturrezeptur**

## Figur 6

711

| Muster 1 |

712

731

| Modell |

740

| Produktion Erstrezeptur |

721

| Rohstoff |

732

722

Rohstoffmerkmale

## Figur 7

## Figur 8

## Figur 9

## Figur 10